# EUROPÄISCHE PATENTANMELDUNG

(11) **EP 4 666 823 A1**
(43) Veröffentlichungstag der Anmeldung: **24.12.2025**
(21) Anmeldenummer: 25176394.2
(22) Anmeldetag: 14.05.2025
(51) Int. Cl.: A01B 69/00, A01B 69/04, A01B 79/00, A01F 15/08

(54) **ASSISTENZSYSTEM SOWIE VERFAHREN ZUR ANSTEUERUNG EINES GESPANNS**

(30) Priorität: 19.06.2024 DE 102024117251
(71) Anmelder: Usines CLAAS France S.A.S, 57140 St. Rémy / Woippy (FR)
(72) Erfinder: Fuchs, Volker, 54439 Saarburg (DE); Batancourt, Grégory, 57130 Vionville (FR); Bonhomme, Thierry, 57730 Macheren (FR); Fischer, Josef, 88400 Biberach (DE); Henselmeyer, Hendrik, 49214 Bad Rothenfelde (DE); Obellianne, Steve, 57530 Courcelles-Chaussy (FR); Risse, Nicolas, 57645 Retonfey (FR); Rongvaux, Laurent, 54800 Tronville (FR); Wieckhorst, Jan Carsten, 29525 Uelzen Orsteil Hanstedt 2 (DE); Dommange, Pierre, 722220 Saint-Mars-d Outillé (FR); Bistritz, Philipp, 78337 Öhningen (DE)
(74) Vertreter: CLAAS Gruppe

(57) **Zusammenfassung**

Die vorliegende Erfindung betrifft ein Assistenzsystem (20), welches dazu eingerichtet ist, ein Gespann, umfassend ein Zugfahrzeug (1) und eine Ballenpresse (2) zur Herstellung von Erntegutballen (19), anzusteuern, wobei das Zugfahrzeug (1) und die Ballenpresse (2) jeweils mittels des Assistenzsystems (20) ansteuerbare Arbeitsaggregate umfassen, wobei das Assistenzsystem (20) dazu eingerichtet ist, Informationen (40) von zumindest einer landwirtschaftlichen Arbeitsmaschinenkombination (22), die dem mit der Ballenpresse (2) durchzuführenden Ballenpressvorgang (35) vorausgehende Arbeitsaufgaben(31) zur Bereitstellung zumindest eines Schwads (29) auf einer landwirtschaftlichen Fläche (F) durchführt, zu empfangen und diese Informationen (40) zur Generierung eines Schwadprofils (46) auszuwerten, um basierend auf dem generierten Schwadprofil (46) wenigstens eine Bearbeitungsstrategie (BS) zur Durchführung des Ballenpressvorganges (35) durch das Gespann auf der Fläche (F) zu bestimmen.

## Beschreibung

Die vorliegende Erfindung betrifft ein Assistenzsystem gemäß dem Oberbegriff des Anspruches 1 sowie ein Verfahren zur Ansteuerung eines Gespanns gemäß dem Oberbegriff des nebengeordneten Anspruches 15.

Die WO 2018/206669 A1 beschreibt ein System mit einer Steuerungsvorrichtung zur Ansteuerung einer Ballenpresse auf einer landwirtschaftlichen Fläche, wobei die Steuerungsvorrichtung mit der Ballenpresse verbunden ist. Die Ballenpresse wird in der Regel von einem Zugfahrzeug gezogen und angetrieben, welche ein Gespann bilden. Die Steuerungsvorrichtung empfängt Daten eines anderen auf der Fläche befindlichen landwirtschaftlichen Fahrzeugs. Die von dem anderen landwirtschaftlichen Fahrzeug empfangenen Daten werden durch die Steuerungsvorrichtung zur Ermittlung von Routenplandaten verwendet, die für eine von der Ballenpresse auf der Fläche zu fahrende Route repräsentativ sind. So ist es aus der WO 2018/206669 A1 bekannt, dass die Steuerungsvorrichtung vorhandene Daten eines auf der Fläche erzeugten Schwads verwendet, um die Route oder die Fahrgeschwindigkeit der Ballenpresse anzupassen. Zur Ansteuerung der Ballenpresse ist somit vorgesehen, diese entsprechend der die Fläche vorangehend bearbeitende landwirtschaftliche Fahrzeug zur Verfügung gestellten Daten anzusteuern. Die Einstellung des Gespanns umfasst eine Vielzahl von einzelnen Parametern, die sich mitunter wechselweise beeinflussen, wodurch Einfluss auf den Ballenpressvorgang und die von der Ballenpresse geformten Erntegutballen genommen wird. Diese Einstellung ist hochkomplex und sensibel, sodass bei falsch gewählten Einstellungen die gebildeten Erntegutballen unbrauchbar bzw. unwirtschaftlich sind. Auch erfahrene Bediener können die erforderlichen Einstellungen aufgrund der Komplexität nicht immer in der Weise vornehmen, dass stets das gewünschte Ergebnis erreicht wird.

Ausgehend vom vorstehend genannten Stand der Technik liegt der Erfindung die Aufgabe zugrunde, ein Assistenzsystem sowie ein Verfahren zur Ansteuerung eines Gespanns bereitzustellen, welche einen Bediener des Gespanns bei der Einstellung unterstützen.

Diese Aufgabe wird erfindungsgemäß durch ein Assistenzsystem mit den Merkmalen des Anspruches 1 sowie ein Verfahren zur Ansteuerung eines Gespanns mit den Merkmalen des nebengeordneten Anspruches 15 gelöst. Vorteilhafte Weiterbildungen sind Gegenstand der abhängigen Ansprüche.

Gemäß dem Anspruch 1 wird ein Assistenzsystem vorgeschlagen, welches dazu eingerichtet ist, ein Gespann, umfassend ein Zugfahrzeug und eine Ballenpresse zur Herstellung von Erntegutballen, anzusteuern, wobei das Zugfahrzeug und die Ballenpresse jeweils mittels des Assistenzsystems ansteuerbare Arbeitsaggregate umfassen. Erfindungsgemäß ist vorgesehen, dass das Assistenzsystem dazu eingerichtet ist, Informationen von zumindest einer landwirtschaftlichen Arbeitsmaschinenkombination, die dem mit der Ballenpresse durchzuführenden Ballenpressvorgang vorausgehende Arbeitsaufgaben zur Bereitstellung zumindest eines Schwads auf einer landwirtschaftlichen Fläche durchführt, zu empfangen und diese Informationen zur Generierung eines Schwadprofils auszuwerten, um basierend auf dem generierten Schwadprofil wenigstens eine Bearbeitungsstrategie zur Durchführung des Ballenpressvorganges durch das Gespann auf der Fläche zu bestimmen.

Der Erfindung liegt die Überlegung zugrunde, basierend auf dem generierten Schwadprofil wenigstens eine Bearbeitungsstrategie zu bestimmen, welche die im Vorfeld des durchzuführenden Ballenpressvorganges bestehenden und erzeugten Bedingungen berücksichtigt, um die erreichbare Qualität der Erntegutballen durch den Ballenpressvorgang zu optimieren.

Bevorzugt können die Informationen zur Generierung des Schwadprofils Erntegutparameter des auf der Fläche als zu verarbeitendem Schwad abgelegten Erntegutes sowie die Lage, Masse und geometrische Eigenschaften des Schwads wiedergebende Schwadparameter umfassen.

Bevorzugt kann das Assistenzsystem dazu eingerichtet sein, der Bestimmung der wenigstens einen Bearbeitungsstrategie historische und/oder prognostizierte Umweltparameter zugrunde zu legen, die in zumindest einer externen Datenquelle abrufbar hinterlegt und/oder hinterlegbar sind.

Dabei können die Umweltparameter zumindest einen Parameter aus der Gruppe Umgebungstemperatur, Luftfeuchtigkeit, Witterungsverhältnisse, Bewölkungsgrad, Intensität und Dauer der Sonneneinstrahlung, Verdunstung von Feuchtigkeit aus dem Boden, und/oder Niederschlagsmengen, Bodenart, Bodenfeuchte umfassen.

Insbesondere kann die wenigstens eine Bearbeitungsstrategie einen Betriebsparameterdatensatz zur Einstellung und/oder Ansteuerung des Gespanns, einen Routenplan für das die Fläche befahrende Gespann und/oder einen Bereitstellungs- und Einsatzplan für die Verwendung von Betriebsmitteln umfassen. Der Bereitstellungs- und Einsatzplan kann bevorzugt Daten über die Art und/oder Menge von Betriebsmitteln umfassen sowie die logistische Planung zur Bereitstellung auf der zu bearbeitenden Fläche. Betriebsmittel der Ballenpresse können beispielsweise Bindematerialien wie Garn oder Folie sowie Siliermittel sein. Die wenigstens eine bestimmte Bearbeitungsstrategie kann auch die Auswahl eines geeigneten Gespanns zur Durchführung des Ballenpressvorganges als Arbeitsaufgabe umfassen.

Die wenigstens eine von dem Assistenzsystem erstellte Bearbeitungsstrategie berücksichtig die Einflüsse auf das zu verarbeitende Erntegut, welche im erstellten Schwadprofil hinterlegt sind.

Gemäß einer bevorzugten Weiterbildung kann das Assistenzsystem dazu eingerichtet sein, der Generierung der wenigstens einen Bearbeitungsstrategie gespannspezifische Randbedingungen zugrunde zu legen. Gespannspezifische Randbedingungen ergeben sich unter anderem aus Art und Typ von dem das Gespann bildenden Zugfahrzeug und der daran adaptierten Ballenpresse. Gespannspezifische Randbedingungen können eine mittels eines Antriebsaggregats des Zugfahrzeugs einstellbare Fahrgeschwindigkeit des Gespanns, ein mittels eines Lenksystems des Zugfahrzeugs einstellbarer Lenkwinkel des Zugfahrzeugs, eine Ausrichtung der Ballenpresse relativ zum Zugfahrzeug, eine Drehzahl einer Zapfwelle des Zugfahrzeugs, ein mittels eines Hydrauliksystems des Zugfahrzeugs bereitgestellter hydraulischer Druck, ein Reifendruck zumindest eines Bodeneingriffsmittels des Zugfahrzeugs, ein Drehmoment und/oder eine Drehgeschwindigkeit einer Pick-up der Ballenpresse, ein Drehmoment und/oder eine Drehgeschwindigkeit eines Rotors der Ballenpresse, ein Zeitpunkt zur Aktivierung oder Deaktivierung von Schneidmessern der Ballenpresse, eine Drehzahl und/oder Anzahl von Hüben eines Raffers der Ballenpresse, ein in einer Presskammer der Ballenpresse aufgebrachter Pressdruck, ein Zeitpunkt zur Aktivierung oder Deaktivierung einer Knotereinrichtung der Ballenpresse und/oder ein Zeitpunkt zur Ablage eines Ballens ist.

Insbesondere können dem Ballenpressvorgang vorausgehende Arbeitsaufgaben eine Arbeitsaufgabe "Mähen", eine Arbeitsaufgabe "Wenden" und/oder eine Arbeitsaufgabe "Schwaden" umfassen, wobei eine bei der Arbeitsaufgabe "Mähen" verwendete Arbeitsmaschinenkombination aus einer Arbeitsmaschine und mindestens einem daran adaptierten Mähwerk, eine bei der Arbeitsaufgabe "Wenden" verwendete Arbeitsmaschinenkombination aus einer Arbeitsmaschine und einem daran adaptierten Wender und eine bei der Arbeitsaufgabe "Schwaden" verwendete Arbeitsmaschinenkombination aus einer Arbeitsmaschine und mindestens einem daran adaptierten Schwader gebildet ist. Die Durchführung der vorstehend aufgelisteten Arbeitsaufgaben kann dabei durch eine Arbeitsmaschine mit wechselnden Anbaugeräten, d.h. Mähwerk, Wender, Schwader, durchgeführt werden.

Des Weiteren kann das Assistenzsystem dazu eingerichtet sein, von der zumindest einen Arbeitsmaschinenkombination während der Durchführung der zumindest einen auf der landwirtschaftlichen Fläche auszuführenden Arbeitsaufgabe und/oder einem maschinenfernen Sensorsystem sensorisch erfasste, georeferenzierte Daten des Erntegutes, der Fläche sowie der Umgebung und georeferenzierte Einstelldaten der Arbeitsmaschinenkombination, insbesondere in Echtzeit, zu empfangen und auszuwerten. Die Ausführung der Arbeitsaufgabe "Schwaden" durch die dafür vorgesehene Arbeitsmaschinenkombination und die anschließende Durchführung des Ballenpressvorganges durch das Gespann orientieren sich unter anderem am Feuchtigkeitsgehalt des Erntegutes. Entsprechend ist es für die Bestimmung der wenigstens einen Bearbeitungsstrategie wesentlich, die Daten der Arbeitsmaschinenkombinationen, die zuvor die landwirtschaftliche Fläche bearbeiten, zu empfangen und auszuwerten.

Gemäß einer bevorzugten Weiterbildung kann der Bestimmung der wenigstens einen Bearbeitungsstrategie zur Durchführung des Ballenpressvorganges zumindest eine vorgebbare Zielgröße zugrunde liegen.

Insbesondere kann die zumindest eine vorgebbare Zielgröße aus der Gruppe Effizienz, Durchsatz, Dichte, Qualität, Gewicht, Menge, Anwendung als Futtermittel oder Biogas, Dimensionsgrößen, zu erzielende Materialparameter des im Erntegutballen enthaltenen Ernteguts, zu erzielender Energiegehalt der Erntegutballen sein.

Bevorzugt kann das Assistenzsystem dazu eingerichtet sein, das Gespann gemäß der bestimmten Bearbeitungsstrategie automatisch anzusteuern.

Gemäß einer Weiterbildung kann das Assistenzsystem dazu eingerichtet sein, zumindest einen gemäß der bestimmten Bearbeitungsstrategie generierten Betriebsparameterdatensatz automatisch an das Gespann zu übertragen und die Einstellung des Gespanns entsprechend dem Betriebsparameterdatensatz automatisch zu initiieren und/oder die vorzunehmenden Einstellungen mittels einer dem Gespann zugeordneten Anzeigevorrichtung, insbesondere auswählbar, zu visualisieren. Letzteres vereinfacht es dem Bediener des den Ballenpressvorgang ausführenden Gespanns die vorzunehmenden Einstellungen manuell umzusetzen.

Insbesondere kann das Assistenzsystem dazu eingerichtet sein, eine Feldkarte der Fläche mit für erzeugte Schwadprofile spezifischen Profildaten und/oder mit für abgelegte Erntegutballen spezifischen Erntegutballendaten zu erstellen.

Bevorzugt kann das Assistenzsystem in ein externes Datenverarbeitungssystem, insbesondere ein Farmmanagementsystem, oder in eine Steuerungsvorrichtung des Zugfahrzeugs und/oder eine Steuerungsvorrichtung der Ballenpresse implementiert sein.

Die eingangs gestellte Aufgabe wird weiterhin durch ein Verfahren zur Ansteuerung eines Gespanns mit den Merkmalen des nebengeordneten Anspruches 15 gelöst.

Gemäß dem Anspruch 15 wird ein Verfahren zur Ansteuerung eines Gespanns vorgeschlagen, umfassend ein Zugfahrzeug und eine Ballenpresse zur Herstellung von Erntegutballen, wobei das Zugfahrzeug und die Ballenpresse jeweils angesteuerte Arbeitsaggregate aufweisen, die mittels eines, insbesondere nach einem der vorangehenden Ansprüche ausgeführten, Assistenzsystems angesteuert werden, wobei Informationen von zumindest einer landwirtschaftlichen Arbeitsmaschinenkombination von dem Assistenzsystem empfangen werden, durch welche dem mit der Ballenpresse durchzuführenden Ballenpressvorgang vorausgehende Arbeitsaufgaben zur Bereitstellung zumindest eines Schwads auf einer landwirtschaftlichen Fläche durchgeführt werden, und dass diese Informationen zur Generierung eines Schwadprofils durch das Assistenzsystem ausgewertet werden, um basierend auf dem generierten Schwadprofil wenigstens eine Bearbeitungsstrategie zur Durchführung des Ballenpressvorganges durch das Gespann auf der Fläche zu bestimmen. Auf die Ausführungen zum erfindungsmäßen Assistenzsystem darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung eines landwirtschaftlichen Gespanns aus einem Zugfahrzeug und einer daran adaptierten Ballenpresse;
- Fig. 2: eine schematisch und exemplarische Darstellung eines Futterernteprozesses; und

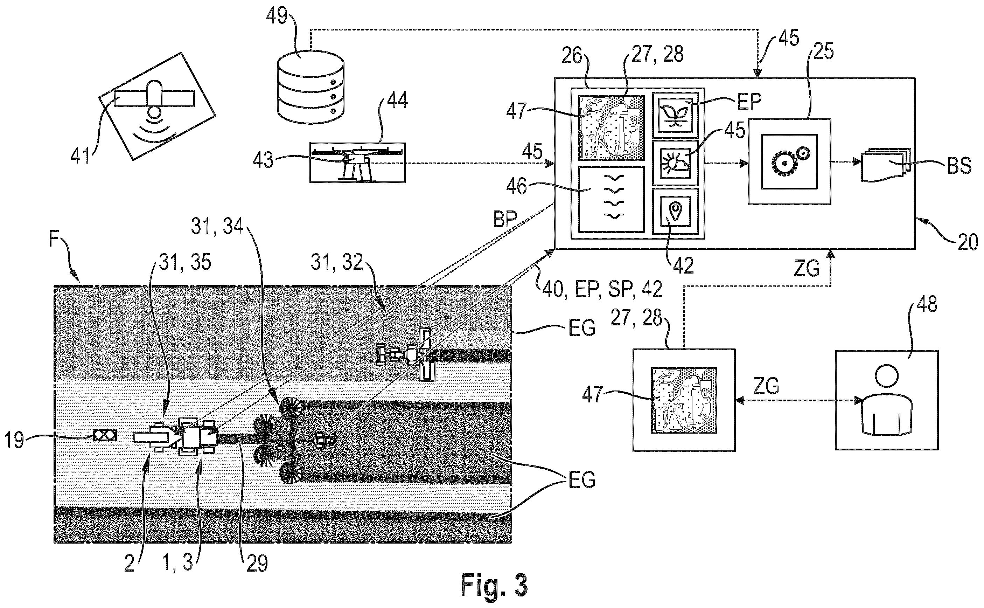

- Fig. 3: eine schematisch und exemplarische Darstellung eines Assistenzsystems des Gespanns im Kontext mit dem Futterernteprozess.

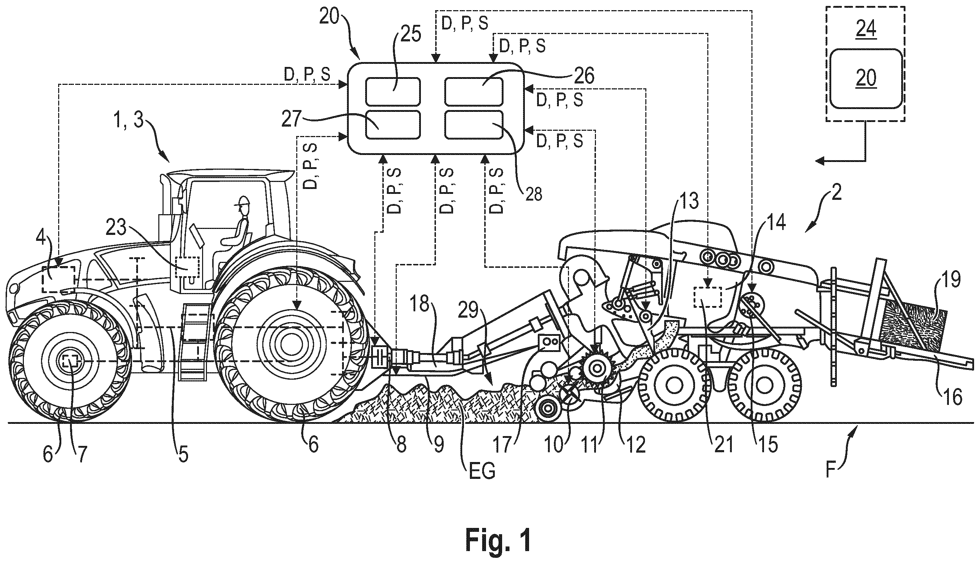

Fig. 1 zeigt schematisch und exemplarisch eine Darstellung eines landwirtschaftlichen Gespanns aus einem Zugfahrzeug 1 und einer daran adaptierten Ballenpresse 2. Die Ballenpresse 2 ist beispielhaft als Quaderballenpresse dargestellt wobei gleichermaßen eine Rundballenpresse an das Zugfahrzeug 1, hier und vorzugsweise ein Traktor 3, adaptiert sein könnte.

Sowohl das Zugfahrzeug 1 als auch die an das Zugfahrzeug 1 adaptierte Ballenpresse 2 umfassen jeweils verschiedene Arbeitsaggregate, für welche zur Durchführung eines Ballenpressvorgangs 35 ein Betriebsparameterdatensatz BP zu deren Einstellung und Betrieb bereitgestellt werden müssen. Arbeitsaggregate des Zugfahrzeugs 1 sind unter anderem ein Antriebsaggregat 4, das als Verbrennungsmotor, als hybrides Antriebsaggregat oder aber als elektromotorisches Antriebsaggregat ausgestaltet sein kann, ein Antriebsstrang 5 mit verschiedenen Getriebebaugruppen, Kupplungen und Wellen, Bodeneingriffsmittel 6, hier in Gestalt von Reifen dargestellt, die allerdings auch als Raupenlaufwerke ausgebildet sein können, ein Lenksystem 7 zum Lenken des Zugfahrzeugs 1, eine Zapfwelle 8 zur Übertragung von Antriebsleistung an die Ballenpresse 2 und/oder ein Hydrauliksystem 9 des Zugfahrzeugs 1.

Arbeitsaggregate der als Quaderballen ausgeführten Ballenpresse 2 sind insbesondere eine Pick-up 10, ein Rotor 11, Schneidmesser 12, ein Raffer 13, eine Presskammer 14 mit einem Pressmittel, eine Knotereinrichtung 15, eine - nicht dargestellte - Heccklappe, eine Ballenablageeinrichtung 16, ein Hydrauliksystem 17 und/oder eine Deichsel 18. Mittels der Pick-up 10 wird in Form eines Schwads 29 abgelegtes Erntegut EG vom Boden einer zu bearbeitenden landwirtschaftlichen Fläche F aufgenommen. Arbeitsaggregate einer als Rundballenpresse ausgeführten Ballenpresse 2 unterscheiden sich prinzipbedingt zumindest teilweise von der Quaderballenpresse.

Der Ballenpresse 2 ist im dargestellten Ausführungsbespiel ein Assistenzsystem 20 zugeordnet. Das Assistenzsystem 20 kann in eine Steuerungsvorrichtung 21 der Ballenpresse 2 implementiert sein. Mittels des Assistenzsystem 20 sind die Arbeitsaggregate des Zugfahrzeugs 1 und der Ballenpresse 2 ansteuerbar. Das Assistenzsystem 20 kann alternativ räumlich getrennt von der Steuerungsvorrichtung 21 der Ballenpresse 2 implementiert sein, beispielsweise in eine Steuerungsvorrichtung 23 des Zugfahrzeugs 1 und/oder ein Farmmanagementsystem 24.

Das Assistenzsystem 20 umfasst eine Recheneinheit 25, eine Speichereinheit 26, eine Anzeigeeinrichtung 27 sowie eine Ein- und Ausgabeeinheit 28. Die Anzeigeeinrichtung 27 sowie die Ein- und Ausgabeeinheit 28 können wahlweise Bestandteil des Assistenzsystems 20 sein oder von diesem unabhängig ausgeführt sein, beispielsweise in Gestalt eines separaten Terminals oder als Bestandteil eines mobilen Endgeräts. Die Anzeigeeinrichtung 27 und die Ein- und Ausgabeeinheit 28 sind zumindest mit dem Assistenzsystem 20 zur Übertragung von Daten verbunden, wobei auch hier die Übertragung wahlweise drahtlos oder kabelgebunden erfolgen kann. Die Anzeigeeinrichtung 27 und die Ein- und Ausgabeeinheit 28 können bevorzugt als eine Einheit ausgeführt sein.

Daten D und/oder Parameter P des Zugfahrzeugs 1 und/oder der Ballenpresse 2, die für die Durchführung des Ballenpressvorgangs 35 von dem Assistenzsystem 20 bereitgestellt und durch Steuersignale S eingestellt werden können, sind vorzugsweise eine Fahrgeschwindigkeit des Zugfahrzeugs 1, die beispielsweise mittels des Antriebsaggregats 4 des Zugfahrzeugs 1 vorgegeben werden kann, ein Lenkwinkel des Zugfahrzeugs 1, der beispielsweise mittels des Lenksystems 7 eingestellt werden kann, eine Ausrichtung der Ballenpresse 2 relativ zu dem Zugfahrzeug 1, die beispielsweise mittels der Deichsel 18 eingestellt werden kann, eine Drehzahl der Zapfwelle 8 des Zugfahrzeugs, ein von dem Zugfahrzeug 1 mittels des Hydrauliksystems 9 bereitstellbarer hydraulischer Druck, ein Reifendruck zumindest eines Bodeneingriffsmittels 6, ein Drehmoment und/oder eine Drehgeschwindigkeit der Pick-up 10 der Ballenpresse 2, ein Drehmoment und/oder eine Drehgeschwindigkeit des Rotors 11, ein Zeitpunkt zur Aktivierung oder Deaktivierung der Schneidmesser 12, eine Drehzahl und/oder Anzahl von Hüben des Raffers 13, ein in der Presskammer 14 aufgebrachter Pressdruck, ein Zeitpunkt zur Aktivierung oder Deaktivierung der Knotereinrichtung 15 und/oder ein Zeitpunkt zur Ablage eines gepressten Erntegutballens 19. Ebenso zählt die Aufnahmebreite der Pick-up 10 zu den Daten D und/oder Parametern P der Ballenpresse 2, die für die vorausgehende Planung durch das Assistenzsystem 20 relevant sind.

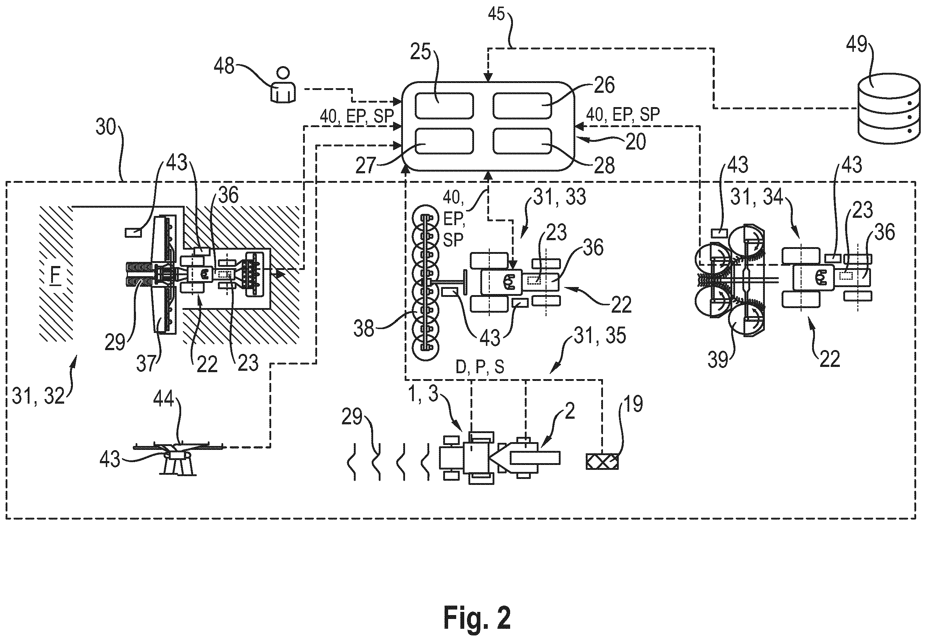

In Fig. 2 ist eine schematisch und exemplarische Darstellung eines Futterernteprozesses 30 gezeigt. Der dargestellte Futterernteprozess 30 umfasst eine Vielzahl an verschiedenen landwirtschaftlichen Arbeitsaufgaben 31. Im Einzelnen sind in Fig. 2 als Arbeitsaufgaben 31 des Futterernteprozesses 30 in chronologischer Abfolge Mähen 32, Wenden oder Zetten 33, Schwaden 34 und der Ballenpressvorgang 35 abgebildet. Weitere Prozessschritte oder Arbeitsaufgaben 31, die in Fig. 2 nicht explizit abgebildet sind, wie Aufbereiten, Anwelken, Trocknen und Rechen von Erntegut EG, sind weiterhin mögliche Arbeitsaufgaben 31 des Futterernteprozesses 30, die dem Ballenpressvorgang 35 vorangehen.

Die Durchführung der Arbeitsaufgaben 31 Mähen 32, Wenden 33, Schwaden 34 ist der Durchführung des Ballenpressvorganges 35 vorgelagert. Bei der Arbeitsaufgabe 31 Mähen 32 wird eine Arbeitsmaschinenkombination 22 verwendet, die eine landwirtschaftliche Arbeitsmaschine 36 und mindestens einem daran adaptierten Mähwerk 37 aufweist, eine bei der Arbeitsaufgabe 31 Wenden 33 verwendete Arbeitsmaschinenkombination 22 umfasst einer Arbeitsmaschine 36 und einen daran adaptierten Wender 38 und eine bei der Arbeitsaufgabe 31 Schwaden 34 verwendete Arbeitsmaschinenkombination 22 umfasst eine landwirtschaftliche Arbeitsmaschine 36 und mindestens einen daran adaptierten Schwader 39.

In dem in FIG. 2 schematisch dargestellten Futterernteprozess 30 wird die Arbeitsaufgabe Mähen 32 beispielsweise durch die Arbeitsmaschine 36 mit Front- und Seitenmähwerken 37 realisiert, wobei das Erntegut EG in einem einzigen Schwad 29 abgelegt wird. Das dreiteilige Mähwerk 37 kann auch nur als ein- oder zweiteiliges Mähwerk ausgeführt sein und mehrere Schwaden 29 bilden. Zudem kann das Erntegut EG bei der Durchführung der Arbeitsaufgabe 31 Mähen 32 auch in Breitablage auf der zu bearbeitenden Fläche F abgelegt werden.

Die Arbeitsaufgabe 31 Wenden 33 ist der Arbeitsaufgabe 31 Mähen 32 nachgeordnet und geht der Arbeitsaufgabe 31 Ballenpressvorgang 35 voraus, wobei in diesem Fall beim Mähen 32 das Erntegut EG in Breitablage abgelegt wird. Die Arbeitsaufgabe 31 Wenden 33 oder Zetten wird in Abhängigkeit von der Feuchte des in Breitablage abgelegten Erntegutes EG ein oder mehrmals durchgeführt.

Wurde das Erntegut EG in Breitablage auf der zu bearbeitenden Fläche F abgelegt, umfasst Futterernteprozess 30 die nachfolgende Arbeitsaufgabe 31 des Schwadens 34.

Die Durchführung der Arbeitsaufgaben 31 durch die zumindest eine Arbeitsmaschinenkombination 22 erfordert die Einstellung von Betriebsparametern der jeweiligen Arbeitsmaschinenkombination 22, die entsprechend ihrer Arbeitsaufgabe 31 und den äußeren Bedingungen variieren.

Die Qualität des oder der abgelegten Schwaden 29, die durch die Arbeitsmaschinenkombinationen 22, welche die Arbeitsaufgabe 31 Mähen 32, Wenden 33 und/oder Schwaden 34 durchführen, im Ergebnis erzeugt werden, bestimmt neben den Ernteguteigenschaften sowie Umgebungsbedingungen, die Qualität, des durch die Ballenpresse 2 erzeugten Erntegutballens 19.

Das Assistenzsystem 20 ist dazu eingerichtet, Informationen 40 von zumindest einer der landwirtschaftlichen Arbeitsmaschinenkombinationen 22, die dem mit der Ballenpresse 2 durchzuführenden Ballenpressvorgang 34 vorausgehende Arbeitsaufgaben 31, bei denen es sich um die Arbeitsaufgabe 31 Mähen 32, Wenden 33 und/oder 34 Schwaden handelt, zur Bereitstellung zumindest eines Schwads 29 auf der landwirtschaftlichen Fläche F durchführt, zu empfangen und diese Informationen 40 zur Generierung eines Schwadprofils 46 auszuwerten. Das Assistenzsystem 20 bestimmt basierend auf dem generierten Schwadprofil 46 wenigstens eine Bearbeitungsstrategie BS zur Durchführung des Ballenpressvorganges 35 durch das Gespann aus Zugfahrzeug 1 und Ballenpresse 2 auf der Fläche F.

Die Informationen 40 zur Generierung des Schwadprofils 46 umfasst Erntegutparameter EP des auf der Fläche F als zu verarbeitendem Schwad 29 abgelegten Erntegutes EG sowie Schwadparameter SP, welche unter anderem Lage, Masse und geometrische Eigenschaften des Schwads 29 wiedergeben.

Das generierte Schwadprofil 46 umfasst die Erntegutparameter EP und die Schwadparameter SP, welche insbesondere georeferenziert erfasst werden. Zur Erfassung der Erntegutparameter EP und der Schwadparameter SP sind die Arbeitsmaschinenkombinationen 22 mit jeweils zumindest einer Sensoreinrichtung 43 ausgestattet. Die Sensoreinrichtungen 43 können dabei in Abhängigkeit von den zu erfassenden Informationen 40 variieren.

Für die Georeferenzierung der Informationen kann die jeweilige Arbeitsmaschinenkombination 22 eine Positionsbestimmungseinrichtung aufweisen, welche mit einem Satelliten 41 kommuniziert, um während der Bearbeitung der landwirtschaftlichen Fläche F Positionsdaten 42 der Arbeitsmaschinenkombination 22 auf der landwirtschaftlichen Fläche F aufzuzeichnen und zusammen mit den Informationen 40 an das Assistenzsystem 20 zu übermitteln.

Die Erntegutparameter EP des im Schwad 29 abgelegten Ernteguts EG sowie die Schwadparameter SP des auf der zu bearbeitenden Fläche F abgelegten Schwads 29 sind wesentlich, zum einen für einen zielgerichteten und effizienten Betrieb der Ballenpresse 2 und zum anderen auch im Hinblick auf die erreichbare Qualität des gebildeten Erntegutballens 19.

Insbesondere kann das Assistenzsystem 20 dazu eingerichtet sein, eine Feldkarte 47 der bearbeiteten Fläche F mit für erzeugte Schwadprofile 46 spezifischen Profildaten, welche die Erntegutparameter EP und die Schwadparameter SP umfassen, und/oder mit für abgelegte Erntegutballen 19 spezifischen Erntegutballendaten zu erstellen. Die Feldkarte 47 kann darüber hinaus Ertragsdaten beinhalten. Die erstellte Feldkarte 47 kann vom Assistenzsystem 20 an das Farmmanagementsystem 24 übermittelt und in diesem gespeichert werden, um in der nachfolgenden Erntesaison als historische Daten durch das Assistenzsystem 20 abrufbar zur Verfügung zu stehen.

Geometrische Eigenschaften des Schwads 29 sind insbesondere die Form respektive die Querschnittskontur des Schwads 29, eine seitliche Verteilung von Erntegut EG im Schwad 29 sowie die Breite und die Höhe des Schwads 29. Die seitliche Verteilung des Erntegutes EG im Schwad 29 hat einen maßgeblichen Einfluss auf die Gleichmäßigkeit der Erntegutaufnahme durch die Pick-up 10. Dies wirkt sich auch auf die nachfolgenden Bearbeitungsschritte innerhalb der Ballenpresse 2 aus. Unter dem Begriff Lage des Schwads 29 ist unter anderem der Verlauf, insbesondere die Geradlinigkeit des Verlaufs, in Ablagerichtung und dessen lateraler Abstand zu einem benachbarten Schwad 29 zu verstehen.

Ein wesentlicher Erntegutparameter EP des im Schwad 29 abgelegten Ernteguts EG ist seine inhaltliche Zusammensetzung. Die inhaltliche Zusammensetzung wird durch sensorisch erfasste Daten aus der Gruppe Trockengrad des zu pressenden Erntegutes EG, Feuchtigkeitsgehalt, Trockensubstanzgehalt, Rohfaserzusammensetzung, Rohascheanteil, Zuckergehalt, Rohproteingehalt und/oder Rohfettgehalt bestimmt. Weitere Erntegutparameter EP sind Erntegutart, Erntegutsorte, Blattflächenindex des Ernteguts EG, ein stomatärer Widerstand des Ernteguts EG, eine Wachsschicht des Ernteguts EG, eine Bestandsdichte des Ernteguts EG sowie eine Bestandshöhe des Ernteguts EG und/oder eine Stoppelhöhe.

Das Assistenzsystem 20 ist zudem dazu eingerichtet, der Bestimmung der wenigstens einen Bearbeitungsstrategie BS historische und/oder prognostizierte Umweltparameter 45 zugrunde zu legen, die in zumindest einer externen Datenquelle 49 abrufbar hinterlegt und/oder hinterlegbar sind. Die externe Datenquelle 49 kann auch das Farmmanagementsystem 24 umfassen.

Des Weiteren kann ein maschinenfernes Sensorsystem 44, beispielsweise eine Drohne mit zumindest einer Sensoreinrichtung 43, zum Einsatz kommen, um einzelne Schwadparameter SP und/oder Umweltparameter 45 georeferenziert zu erfassen und diese an das Assistenzsystem 20 zu übermitteln. Die zumindest eine Sensoreinrichtung 43 des maschinenfernen Sensorsystems 44 kann zumindest einen optischen Sensor aufweisen. Zur georeferenzierten Erfassung weist das maschinenferne Sensorsystem 44 einen Positionsortungssensor auf.

Die Umweltparameter 45 umfassen zumindest einen Parameter aus der Gruppe Umgebungstemperatur, Luftfeuchtigkeit, Witterungsverhältnisse, Bewölkungsgrad, Intensität und Dauer der Sonneneinstrahlung, Verdunstung von Feuchtigkeit aus dem Boden, Bodenart, Bodenfeuchte und/oder Niederschlagsmengen.

Die wenigstens eine durch das Assistenzsystem 20 bestimmte Bearbeitungsstrategie BS umfasst den Betriebsparameterdatensatz BP zur Einstellung/und oder Ansteuerung des Gespanns, einen Routenplan für das die Fläche F befahrende Gespann und/oder einen Bereitstellungs- und Einsatzplan für die Verwendung von Betriebsmitteln durch das Gespann. Die durch das Assistenzsystem 20 bestimmte Bearbeitungsstrategie BS berücksichtigt die im Schwadprofil 46 hinterlegten Erntegutparameter EP, Schwadparameter SP sowie Umweltparameter 45, um die Durchführung des Ballenpressvorganges 35 zu optimieren. Dazu kann auch die Auswahl eines geeigneten Gespanns zur Durchführung des Ballenpressvorganges 35 als Arbeitsaufgabe 31 gehören.

Der Bestimmung der wenigstens eine Bearbeitungsstrategie BS kann zur Durchführung des Ballenpressvorganges 35 zumindest eine vorgebbare Zielgröße ZG zugrunde liegen. Die zumindest eine Zielgröße ZG kann von einem Bediener 48 mittels der Eingabe-Ausgabeeinheit 28 vorgegeben werden.

Insbesondere kann die zumindest eine vorgebbare Zielgröße ZG aus der Gruppe Effizienz, Durchsatz, Dichte, Qualität, Gewicht, Menge, Anwendung als Futtermittel oder Biogas, Dimensionsgrößen, zu erzielende Materialparameter des im Erntegutballen 19 enthaltenen Ernteguts EG, zu erzielender Energiegehalt der Erntegutballen 19 sein.

Das Assistenzsystem 20 ist dazu eingerichtet, das Gespann gemäß der bestimmten Bearbeitungsstrategie BS automatisch anzusteuern.

Insbesondere kann das Assistenzsystem 20 dazu eingerichtet sein, zumindest einen gemäß der bestimmten Bearbeitungsstrategie BS generierten Betriebsparameterdatensatz BP automatisch an das Gespann zu übertragen und die Einstellung des Gespanns entsprechend dem Betriebsparameterdatensatz BP automatisch zu initiieren und/oder die vorzunehmenden Einstellungen mittels einer dem Gespann zugeordneten Anzeigevorrichtung, insbesondere auswählbar, zu visualisieren.

Gemäß einem weiteren Aspekt kann das Assistenzsystem 20 dazu eingerichtet sein, mittels eines in der Speichereinheit 5 hinterlegten mathematischen Modells die Durchführung des Ballenpressvorganges 35 und den als Ergebnis daraus resultierenden Erntegutballen 19 zu simulieren. Dies geschieht unter Verwendung der im Schwadprofil 46 hinterlegten Erntegutparameter EP, Schwadparameter SP sowie Umweltparameter 45. So kann das Assistenzsystem 20 hierzu ein trainierbares künstliches neuronales Netzwerk verwenden. Zum Trainieren des neuronalen Netzwerkes können bereits in der Vergangenheit erstellte Schwadprofile 46 verwendet werden.

Durch die Simulation des Ballenpressvorganges 35 und des als Ergebnis daraus resultierenden Erntegutballens 19 lassen sich Maßnahmen ableiten, die sich an der Erreichung von einer oder mehreren Zielgrößen ZG orientieren können.

So kann beispielsweise der Einsatz eines Schwaders 39 vorgeschlagen werden, um eine bestimmte Erntegutmasse pro Meter im Schwad 29 zusammenzuführen. Dies kann beispielsweise bei Schwaden 29 mit Stroh als Erntegut EG der Fall sein, um zwei oder drei Schwaden 29 mit Stroh zu einem einzelnen Schwad 29 zusammenzuführen.

### Bezugszeichenliste

| | | | |
|---|---|---|---|
| 1 | Zugfahrzeug | 34 | Schwaden |
| 2 | Ballenpresse | 35 | Ballenpressvorgang |
| 3 | Traktor | 36 | Arbeitsmaschine |
| 4 | Antriebsaggregat | 37 | Mähwerk |
| 5 | Antriebsstrang | 38 | Wender |
| 6 | Bodeneingriffsmittel | 39 | Schwader |
| 7 | Lenksystem | 40 | Information |
| 8 | Zapfwelle | 41 | Satellit |
| 9 | Hydrauliksystem | 42 | Positionsdaten |
| 10 | Pick-up | 43 | Sensoreinrichtung |
| 11 | Rotor | 44 | Drohne |
| 12 | Schneidmesser | 45 | Umweltparameter |
| 13 | Raffer | 46 | Schwadprofil |
| 14 | Presskammer | 47 | Feldkarte |
| 15 | Bindeeinrichtung | 48 | Bediener |
| 16 | Ballenablageeinrichtung | 49 | Datenquelle |
| 17 | Hydrauliksystem | | |
| 18 | Deichsel | D | Daten |
| 19 | Erntegutballen | P | Parameter |
| 20 | Assistenzsystem | S | Steuersignale |
| 21 | Steuerungsvorrichtung | BP | Betriebsparameterdatensatz |
| 22 | Arbeitsmaschinenkombination | BS | Bearbeitungsstrategie |
| 23 | Steuerungsvorrichtung | EG | Erntegut |
| 24 | Farmmanagementsystem | EP | Erntegutparameter |
| 25 | Recheneinheit | SP | Schwadparameter |
| 26 | Speichereinheit | ZG | Zielgröße |
| 27 | Anzeigeeinrichtung | | |
| 28 | Eingabe-Ausgabeeinheit | | |
| 29 | Schwad | | |
| 30 | Futterernteprozess | | |
| 31 | Arbeitsaufgabe | | |
| 32 | Mähen | | |
| 33 | Wenden/Zetten | | |

## Patentansprüche

1. Assistenzsystem (20), welches dazu eingerichtet ist, ein Gespann, umfassend ein Zugfahrzeug (1) und eine Ballenpresse (2) zur Herstellung von Erntegutballen (19), anzusteuern, wobei das Zugfahrzeug (1) und die Ballenpresse (2) jeweils mittels des Assistenzsystems (20) ansteuerbare Arbeitsaggregate umfassen, **dadurch gekennzeichnet, dass** das Assistenzsystem (20) dazu eingerichtet ist, Informationen (40) von zumindest einer landwirtschaftlichen Arbeitsmaschinenkombination (22), die dem mit der Ballenpresse (2) durchzuführenden Ballenpressvorgang (35) vorausgehende Arbeitsaufgaben(31) zur Bereitstellung zumindest eines Schwads (29) auf einer landwirtschaftlichen Fläche (F) durchführt, zu empfangen und diese Informationen (40) zur Generierung eines Schwadprofils (46) auszuwerten, um basierend auf dem generierten Schwadprofil (46) wenigstens eine Bearbeitungsstrategie (BS) zur Durchführung des Ballenpressvorganges (35) durch das Gespann auf der Fläche (F) zu bestimmen.

2. Assistenzsystem (20)nach Anspruch 1, **dadurch gekennzeichnet, dass** die Informationen (40) zur Generierung des Schwadprofils (46) Erntegutparameter (EP) des auf der Fläche (F) als zu verarbeitendem Schwad (29) abgelegten Erntegutes (EG) sowie die Lage, Masse und geometrische Eigenschaften des Schwads (29) wiedergebende Schwadparameter (SP) umfassen.

3. Assistenzsystem (20) nach Anspruch 1 oder 2, **dadurch gekennzeichnet, dass** die wenigstens eine Bearbeitungsstrategie (BS) einen Betriebsparameterdatensatz (BP) zur Einstellung/und oder Ansteuerung des Gespanns, einen Routenplan für das die Fläche (F) befahrende Gespann und/oder einen Bereitstellungs- und Einsatzplan für die Verwendung von Betriebsmitteln umfasst.

4. Assistenzsystem (20) nach einem der Ansprüche 1 bis 3, **dadurch gekennzeichnet, dass** das Assistenzsystem (20) dazu eingerichtet ist, der Generierung der wenigstens einen Bearbeitungsstrategie (BS) gespannspezifische Randbedingungen zugrunde zu legen.

5. Assistenzsystem (20) nach einem der vorangehenden Ansprüche, **dadurch gekennzeichnet, dass** das Assistenzsystem (20) dazu eingerichtet ist, der Bestimmung der wenigstens einen Bearbeitungsstrategie (BS) historische und/oder prognostizierte Umweltparameter (45) zugrunde zu legen, die in zumindest einer externen Datenquelle (49) abrufbar hinterlegt und/oder hinterlegbar sind.

6. Assistenzsystem (20) nach Anspruch 5, **dadurch gekennzeichnet, dass** die Umweltparameter (45) zumindest einen Parameter aus der Gruppe Umgebungstemperatur, Luftfeuchtigkeit, Witterungsverhältnisse, Bewölkungsgrad, Intensität und Dauer der Sonneneinstrahlung, Verdunstung von Feuchtigkeit aus dem Boden, Bodenart, Bodenfeuchte und/oder Niederschlagsmengen umfassen.

7. Assistenzsystem (20) nach einem der vorangehenden Ansprüche, **dadurch gekennzeichnet, dass** dem Ballenpressvorgang (35) vorausgehende Arbeitsaufgaben (31) eine Arbeitsaufgabe (31) Mähen (32), eine Arbeitsaufgabe (31) Wenden (33) und/oder eine Arbeitsaufgabe (31) Schwaden (34) umfassen, wobei eine bei der Arbeitsaufgabe (31) Mähen (32) verwendete Arbeitsmaschinenkombination (22) aus einer Arbeitsmaschine (36) und mindestens einem daran adaptierten Mähwerk (37), eine bei der Arbeitsaufgabe (31) Wenden (33) verwendete Arbeitsmaschinenkombination (22) aus einer Arbeitsmaschine (36) und einem daran adaptierten Wender (38) und eine bei der Arbeitsaufgabe (31) Schwaden (34) verwendete Arbeitsmaschinenkombination (22) aus einer Arbeitsmaschine (36) und mindestens einem daran adaptierten Schwader (39) gebildet ist.

8. Assistenzsystem (20) nach Anspruch 7, **dadurch gekennzeichnet, dass** das Assistenzsystem (20) dazu eingerichtet ist, von der zumindest einen Arbeitsmaschinenkombination (22) während der Durchführung der zumindest einen auf der Fläche (F) auszuführenden Arbeitsaufgabe (F) und/oder von einem maschinenfernen Sensorsystem (44) sensorisch erfasste, georeferenzierte Daten des Erntegutes (EG), der Fläche (F) sowie der Umgebung und georeferenzierte Einstelldaten der Arbeitsmaschinenkombination (22), insbesondere in Echtzeit, zu empfangen und auszuwerten.

9. Assistenzsystem (20) nach einem der vorangehenden Ansprüche, **dadurch gekennzeichnet, dass** der Bestimmung der wenigstens einen Bearbeitungsstrategie (BS) zur Durchführung des Ballenpressvorganges (35) zumindest eine vorgebbare Zielgröße (ZG) zugrunde liegt.

10. Assistenzsystem nach Anspruch 9, **dadurch gekennzeichnet, dass** die zumindest eine vorgebbare Zielgröße (ZG) aus der Gruppe Effizienz, Durchsatz, Dichte, Qualität, Gewicht, Menge, Anwendung als Futtermittel oder Biogas, Dimensionsgrößen, zu erzielende Materialparameter des im Erntegutballen (19) enthaltenen Ernteguts (EG), zu erzielender Energiegehalt der Erntegutballen (19) ist.

11. Assistenzsystem (20) nach einem der vorangehenden Ansprüche, **dadurch gekennzeichnet, dass** das Assistenzsystem (20) dazu eingerichtet ist, das Gespann gemäß der bestimmten Bearbeitungsstrategie (BS) automatisch anzusteuern.

12. Assistenzsystem (20) nach einem der vorangehenden Ansprüche, **dadurch gekennzeichnet, dass** das Assistenzsystem (20) dazu eingerichtet ist, zumindest einen gemäß der bestimmten Bearbeitungsstrategie (BS) generierten Betriebsparameterdatensatz (BP) automatisch an das Gespann zu übertragen und die Einstellung des Gespanns entsprechend dem Betriebsparameterdatensatz (BP) automatisch zu initiieren und/oder die vorzunehmenden Einstellungen mittels einer dem Gespann zugeordneten Anzeigevorrichtung (27), insbesondere auswählbar, zu visualisieren.

13. Assistenzsystem (20) nach einem der vorangehenden Ansprüche, **dadurch gekennzeichnet, dass** das Assistenzsystem (20) dazu eingerichtet ist, eine Feldkarte (47) der Fläche (F) mit für erzeugte Schwadprofile (46) spezifischen Profildaten und/oder mit für abgelegte Erntegutballen (19) spezifischen Erntegutballendaten zu erstellen.

14. Assistenzsystem (20) nach einem der vorangehenden Ansprüche, **dadurch gekennzeichnet, dass** das Assistenzsystem (20) in ein externes Datenverarbeitungssystem, insbesondere ein Farmmanagementsystem (24), oder in eine Steuerungsvorrichtung (23) des Zugfahrzeugs (1) und/oder eine Steuerungsvorrichtung (21) der Ballenpresse (2) implementiert ist.

15. Verfahren zur Ansteuerung eines Gespanns, umfassend ein Zugfahrzeug (1) und eine Ballenpresse (2) zur Herstellung von Erntegutballen (19), wobei das Zugfahrzeug (1) und die Ballenpresse (2) jeweils angesteuerte Arbeitsaggregate aufweisen, die mittels eines, insbesondere nach einem der vorangehenden Ansprüche ausgeführten, Assistenzsystems (20) angesteuert werden, **dadurch gekennzeichnet, dass** Informationen (40) von zumindest einer landwirtschaftlichen Arbeitsmaschinenkombination (22) von dem Assistenzsystem (20) empfangen werden, durch welche dem mit der Ballenpresse (2) durchzuführenden Ballenpressvorgang (35) vorausgehende Arbeitsaufgaben (31) zur Bereitstellung zumindest eines Schwads (29) auf einer landwirtschaftlichen Fläche (F) durchgeführt werden, und dass diese Informationen (40) zur Generierung eines Schwadprofils (46) durch das Assistenzsystem (20) ausgewertet werden, um basierend auf dem generierten Schwadprofil (46) wenigstens eine Bearbeitungsstrategie (BS) zur Durchführung des Ballenpressvorganges (35) durch das Gespann auf der Fläche (F) zu bestimmen.
